# EUROPÄISCHE PATENTSCHRIFT

(11) **EP 1 136 346 B1**
(45) Veröffentlichungstag und Bekanntmachung des Hinweises auf die Patenterteilung: **18.05.2005**
(21) Anmeldenummer: 01106993.7
(22) Anmeldetag: 21.03.2001
(51) Int. Cl.: B62D 27/04, B62D 24/02

(54) **Verbindungselement für eine elastische Verbindung zweier Bauteile**
Connecting element for an elastic connection between two construction components
Elément de connection pour une liaison élastique entre deux composants de construction

(30) Priorität: 24.03.2000 DE 20005583 U
(43) Veröffentlichungstag der Anmeldung: 26.09.2001
(73) Patentinhaber: Westrick, Ludger, Dipl.-Ing., 46342 Velen-Ramsdorf (DE); el Abassi, Amor, 46342 Velen-Ramsdorf (DE)
(72) Erfinder: Westrick, Ludger, Dipl.-Ing., 46342 Velen-Ramsdorf (DE); el Abassi, Amor, 46342 Velen-Ramsdorf (DE)
(74) Vertreter: Linnemann, Winfried

(56) Entgegenhaltungen:
- US-A- 4 059 304
- US-A- 4 078 636
- US-A- 5 632 509
- PATENT ABSTRACTS OF JAPAN vol. 1996, no. 02, 29. Februar 1996 (1996-02-29) & JP 07 267132 A (NISSAN SHATAI CO LTD), 17. Oktober 1995 (1995-10-17)

## Beschreibung

Die Erfindung betrifft ein Verbindungselement für eine nur in Zugrichtung oder nur in Zug- und Querrichtung elastische Verbindung zweier Bauteile miteinander, insbesondere eines Fahrzeugaufbaus mit einem Fahrgestell, mit zwei einander gegenüberliegenden Bauteilbereichen, wobei diese mittels eines Befestigungselements, vorzugsweise eine durch zwei Bohrungen in den Bauteilbereichen verlaufende Schraube mit einer Mutter, miteinander verbunden sind, und mit wenigstens einem das Befestigungselement auf einem Teil seiner Länge umgebenden, zwischen einem Kopf des Befestigungselements und dem diesem zugewandten Bauteilbereich angeordneten elastischen Zwischenglied, wobei das elastische Zwischenglied ein aus einem elastisch-flexiblen, inkompressiblen oder gering kompressiblen Material bestehender Körper ist, der in seiner Axialrichtung eingeschlossen oder vorgespannt ist und der an seinem Außenumfang von einer starren Hülse umgeben ist, wobei im montierten Zustand des Verbindungselements durch auftretende Zugkräfte, die die beiden Bauteile voneinander entfernen, der Körper unter Bewegungsdämpfung in seiner Axialrichtung stauchbar und in seiner Radialrichtung nach außen in einem durch den Innendurchmesser der Hülse begrenzten Maß ausdehnbar ist.

Verbindungselemente der genannten Art werden beispielsweise bei der Verbindung eines Fahrzeugaufbaus mit einem zugehörigen Fahrgestell oder Fahrzeugrahmen verwendet. Dabei werden diese Verbindungselemente insbesondere dann eingesetzt, wenn ein starrer Aufbau mit dem Fahrzeugrahmen zu verbinden ist. Im Betrieb des Fahrzeuges unterliegt der Rahmen bei starken Belastungen einer Verwindung, deren Übertragung auf den Aufbau vermieden werden soll. Die Verbindungselemente ermöglicht ein begrenztes und kontrolliertes Abheben des Aufbaus relativ zum Rahmen, so daß Schäden am Aufbau vermieden werden. Die Verwendung derartiger Verbindungselemente wird beispielsweise von LKW-Herstellern vorgeschrieben, wenn deren Fahrgestelle von anderen Herstellern mit Aufbauten versehen werden.

Ein Verbindungselement der oben genannten Art ist aus dem Dokument FR-A-2 717 438 bekannt. Dieses bekannte Verbindungselement besitzt mindestens ein elastisches Zwischenglied, wobei in bevorzugter Ausführung zwei elastische Zwischenglieder getrennt voneinander vorgesehen sind. Das mindestens eine elastische Zwischenglied besteht hier vorzugsweise aus zwei Teilen, nämlich einer radial innen angeordneten Führungshülse, die auf einer Führung axial verschieblich ist, und dem eigentlichen, mit der Hülse verbundenen elastisch-flexiblen Körper. Dieser elastisch-flexible Körper wird hier allerdings nur über einen Teil seiner Höhe von der Hülse umgeben, während ein anderer Teil seiner Höhe radial nach außen freiliegt.

Als nachteilig wird bei diesem bekannten Verbindungselement angesehen, daß es einen relativ komplizierten Aufbau aufweist, weil das elastische Zwischenglied aus zwei miteinander verbundenen Teilen besteht und weil der elastisch-flexible Körper als Teil des elastischen Zwischengliedes eine relativ komplizierte Form aufweist. Außerdem kann es hier bei starken Belastungen zu einer Überlastung des elastisch-flexiblen Körpers mit der Folge einer Beschädigung kommen, insbesondere in dem Bereich, der radial außen nicht von der Hülse umgeben ist. Gleichzeitig ist hier der elastisch-flexible Körper über einen Teil seines Außenumfangs von außen her zugänglich, so daß hier schädigende Einflüsse auf den Körper einwirken können, wie beispielsweise Staub, Feuchtigkeit oder natürliche UV-Strahlung. Als Nachteil ist auch noch zu erwähnen, daß durch die Gleitreibung zwischen der einen Teil des elastischen Zwischengliedes bildenden, radial innen angeordneten Führungshülse und ihrer Führung Verschleiß verursacht wird, wodurch die Funktion des elastischen Zwischengliedes und damit des Verbindungselements insgesamt mit der Zeit schlechter wird, was nur durch regelmäßigen Austausch des elastischen Zwischengliedes behoben werden kann.

Für die vorliegende Erfindung stellt sich deshalb die Aufgabe, ein Verbindungselement der eingangs genannten Art zu schaffen, dessen Herstellung und Montage vereinfacht ist, bei dem eine dauerhafte und gleichbleibende Funktion und Wirkung gewährleistet ist und das auch starke impulsartige Belastungen schadlos aufnimmt und so die verbundenen Bauteile vor Schäden schützt, wobei die Funktion auch im Falle einer unsachgemäßen Montage erhalten bleiben soll.

Die Lösung dieser Aufgabe gelingt erfindungsgemäß mit einem Verbindungselement der eingangs genannten Art, das dadurch gekennzeichnet ist, daß der Kopf des Befestigungselements oder eine zwischen dem Kopf des Befestigungselements und der diesem zugewandten Stirnseite des Körpers angeordnete Unterlegscheibe ein Eintauchen des Kopfes oder der Unterlegscheibe in die Hülse erlaubendes Außenmaß aufweist.

Vorteilhaft wird mit der Erfindung ein Verbindungselement geschaffen, das nur einen elastisch-flexiblen Körper benötigt, und mit dem sich mit geringem Herstellungs- und Montageaufwand eine je nach Ausführung nur in Zugrichtung oder in Zug- und Querrichtung elastische Verbindung zweier Bauteile herstellen läßt. Dabei bleibt das einmal vorgegebene Maß der Elastizität auch über lange Zeit erhalten, denn Ermüdungserscheinungen sind bei dem Körper nur in einem geringeren Maß zu erwarten, so daß seltener eine Reparatur oder ein Ersatz erforderlich wird. Montagefehler, insbesondere ein zu starkes Anziehen des Befestigungselements, führen nicht zu Funktionsstörungen, weil eine falsche, zu hohe Vorspannung innerhalb des Körpers in einem weiten Maß ausgeglichen wird. Zudem kann der Körper aufgrund der ihn umgebenden Hülse auch bei starker mechanischer Belastung nicht beschädigt werden, so daß auch hierin keine Gefahr für eine Verkürzung der Lebensdauer des Verbindungselements liegt. Durch seine Gestaltung hinsichtlich Form und Material ist das Verbindungselement in der Lage, extrem hohe Kraftimpulse schadlos aufzunehmen und zugleich eine Bewegungsdämpfung zu bewirken. Diese Eigenschaften sind insbesondere im Fahrzeugbau erwünscht und vorteilhaft. Durch Wahl der Elastizitätseigenschaften des Körpers kann die gewünschte Elastizität des Verbindungselements in weiten Bereichen ausgewählt und vorbestimmt werden, so daß für die unterschiedlichsten Anwendungen ein passendes Verbindungselement zur Verfügung gestellt wird, dessen Anpassung an die verschiedenen Anwendungen sehr einfach durch Auswahl des geeigneten Körpers erreicht wird. Schließlich kann ein vorhandenes Verbindungselement durch Veränderung der Vorspannung des Körpers in seinen Elastizitätseigenschaften verändert werden, ohne daß ein Austausch von Teilen des Verbindungselements erforderlich wird. Dabei bleibt das erfindungsgemäße Verbindungselement in seiner Bauweise sehr kompakt. Weiter bietet das erfindungsgemäße Verbindungselement einen guten Schutz vor Korrosion, da der das elastische Zwischenglied bildende Körper nicht metallisch und deshalb nicht korrosionsanfällig ist. Vor eventuellen anderen schädlichen Einflüssen, z.B. die natürliche UV-Strahlung, wird der Körper durch die ihn umgebende Hülse und durch den Kopf des Befestigungselements oder die darunter vorgesehene Unterlegscheibe geschützt. Diese Hülse schützt den Körper auch vor schädigenden äußeren mechanischen Einflüssen.

Wie an sich bekannt, kann auch das Verbindungselement gemäß Erfindung mit einem oder mit zwei elastischen Zwischengliedern, hier jeweils in Form der Hülse-Körper-Einheit, ausgestattet sein. Bei zwei Zwischengliedern ist zweckmäßig je eines auf den voneinander weg weisenden Seiten der beiden Bauteilbereiche angeordnet.

In weiterer Ausgestaltung ist bevorzugt vorgesehen, daß der Kopf oder die Unterlegscheibe einen die gesamte Stirnfläche oder fast die gesamte Stirnfläche des Körpers überdeckenden Außendurchmesser aufweist. Die von dem Kopf oder der Unterlegscheibe auf den Körper ausgeübte Kraft wird so über die gesamte oder fast die gesamte Stirnfläche des Körpers verteilt, was Schäden am Körper vermeidet und zu einer langen Haltbarkeit beiträgt. Außerdem ist so der Körper vollständig oder fast vollständig nach außen hin abgeschirmt.

Weiterhin ist bevorzugt vorgesehen, daß der Kopf oder die Unterlegscheibe einen Außendurchmesser aufweist, der um etwa 5 - 10 % kleiner ist als der Innendurchmesser der Hülse. Der Kopf oder die Unterlegscheibe ist dabei so groß wie möglich, ohne die gewünschte Eintauchmöglichkeit von Kopf oder Unterlegscheibe in die Hülse zu behindern.

Bevorzugt ist der elastisch-flexible Körper ein Elastomerkörper. Elastomere sind für den genannten Einsatzzweck besonders gut geeignet, da sie sich hinsichtlich ihrer elastischen Eigenschaften in weiten Bereichen einstellen lassen, weil sie kostengünstig herstellbar und bearbeitbar sind und weil sie bei Auswahl entsprechender Materialien eine sehr gute Dauerhaltbarkeit aufweisen.

In weiterer Ausgestaltung wird vorgeschlagen, daß die Hülse in entspanntem Zustand des Körpers dessen Außenumfang unter Freilassung eines Luftringspalts lose umgibt. In dieser Ausführung des Verbindungselements wird eine relativ leichte Beweglichkeit der miteinander verbundenen Bauteile relativ zueinander bei auftretenden Zugkräften erreicht. Gleichzeitig wird die Bewegungsfreiheit aber begrenzt, sobald der Körper durch radiale Ausdehnung infolge seiner axialen Kompression gegen den Innenumfang der Hülse gedrückt wird. Damit erhält das Verbindungselement vorteilhaft eine Charakteristik mit einem zunächst weichen Ansprechen und dann härter werdenden Begrenzen der Bewegungsfreiheit.

Eine alternative Ausgestaltung sieht vor, daß der Körper an seinem Außenumfang mit der Hülse verbunden, insbesondere verklebt oder verschweißt oder vergossen, ist. Bei dieser Ausführung des Verbindungselements ändert sich die Charakteristik dahingehend, daß von Anfang an ein härteres Ansprechen und eine stärkere Begrenzungswirkung bei der Bewegung der Bauteile relativ zueinander vorliegen.

Insbesondere zur Vereinfachung der Herstellung und der Montage des Verbindungselements kann die Hülse mit einem der beiden Bauteile verbunden oder einstückig ausgeführt sein. Außerdem besteht dann keine Gefahr, daß die Hülse im laufenden Einsatz des Verbindungselements sich vom Körper lösen und verloren gehen könnte.

In ihrer einfachsten Ausführung hat die Hülse die Form eines Rohrabschnitts, der durch einfaches Zuschneiden aus einem längeren Rohr herstellbar ist. Eine weitergehende Ausgestaltung sieht vor, daß die Hülse becherförmig mit einem mit der übrigen Hülse verbunden oder einstückigen Boden mit einer Durchbrechung für das Befestigungselement ausgeführt ist. Der Boden sorgt einerseits für einen Schutz des darin befindlichen Körpers auch im Bereich von dessen zweiter Stirnseite. Weiterhin kann der Boden dazu genutzt werden, die Hülse unverlierbar innerhalb des verbindungselements anzubringen. Die Herstellung einer solchen Hülse kann beispielsweise durch Tiefziehen erfolgen.

Hinsichtlich des Körpers ist in einer ersten Ausgestaltung vorgesehen, daß dieser einstückig ausgeführt ist. Damit ist die Herstellung des Körpers besonders einfach; insbesondere bietet sich hier das Gießen oder Spritzen oder Strangpressen an, wobei in letzterem Fall noch ein Zuschneiden auf eine jeweils passende Länge erfolgen muß.

In einer alternativen Ausführung besteht der Körper aus mehreren Lagen. Diese Ausführung ermöglicht ein Baukastensystem, bei dem Verbindungselemente mit unterschiedlichen Eigenschaften einfach dadurch herstellbar sind, daß der Körper aus einer mehr oder weniger großen Zahl von Lagen zusammengefügt wird.

Weiterhin bietet die Herstellung des Körpers aus mehreren Lagen die vorteilhafte Möglichkeit, für die einzelnen Lagen des Körpers Materialien mit unterschiedlichen Elastizitätseigenschaften einzusetzen. Hierdurch lassen sich die Elastizitätseigenschaften des Körpers insgesamt auf einfache Weise beeinflussen und verändern und für den jeweiligen Anwendungsfall optimieren.

Weiterhin kann zwischen dem dem Körper zugewandten Bauteilbereich und der diesem Bauteilbereich zugewandten Stirnseite des Körpers eine Unterlegscheibe angeordnet sein, deren Außendurchmesser um etwa 5 - 10 % kleiner ist als der Innendurchmesser der Hülse, um dort unabhängig von der vorgefundenen Form des Bauteilbereichs, in welchem das Verbindungselement eingesetzt wird, eine großflächige Krafteinleitung in den Körper zu erreichen.

Weiterhin ist bevorzugt vorgesehen, daß der Körper außenseitig und die Hülse innenseitig eine untereinander gleiche oder ähnliche, runde oder mehreckige Kontur haben. Diese Ausführung ist insbesondere dann zweckmäßig und kostengünstig, wenn der Körper schon in entspanntem Zustand mit seinem Außenumfang am Innenumfang der Hülse anliegt oder mit dieser verbunden ist.

In einer alternativen Ausführung können der Körper außenseitig und die Hülse innenseitig eine voneinander verschiedene, runde und/oder mehreckige kontour haben. Hiermit kann insbesondere erreicht werden, daß der Übergang vom relativ weichen Ansprechen zu Beginn einer Relativbewegung zwischen den Bauteilen bis zur harten Begrenzung der Bewegung größer wird. Damit kann die Charakteristik des elastischen Verhaltens des Verbindungselements bei Bedarf in gewünschter Weise weiter beeinflußt und optimiert werden.

Um eine kompakte Bauart des Verbindungselements zu erreichen und um den elastisch-flexiblen Körper bei seiner Verformung nicht zu überfordern, ist bevorzugt vorgesehen, daß der größte Außendurchmesser des Körpers etwa das 1,5- bis 6-fache des Außendurchmessers des durch den Körper verlaufenden Teils des Befestigungselements beträgt.

Ausführungsbeispiele der Erfindung werden im folgenden anhand einer Zeichnung erläutert. Die Figuren der Zeichnung zeigen:
- Figur 1: ein Verbindungselement in einer ersten Ausführung im eingebauten Zustand im Längsschnitt und
- Figur 2: das Verbindungselement in einer zweiten Ausführung, ebenfalls im eingebauten Zustand, nun in Seitenansicht.

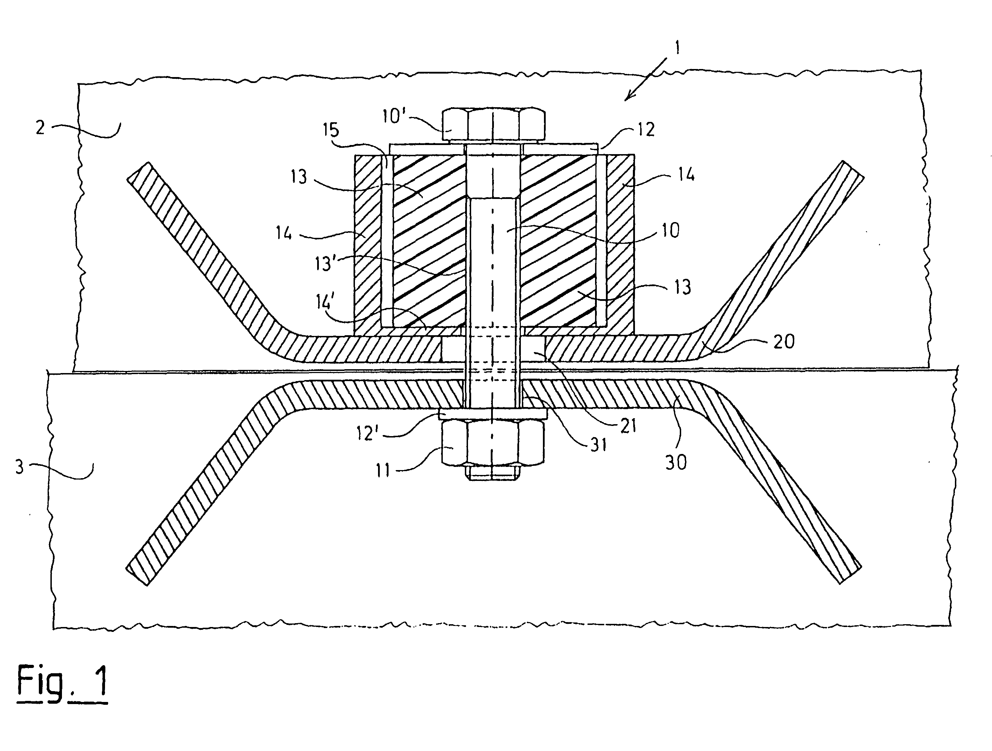

Figur 1 der Zeichnung zeigt ein erstes Verbindungselement 1 in eingebautem Zustand, in dem es zwei Bauteile 2, 3 miteinander verbindet, die im Hintergrund nur ausschnittsweise angedeutet sind. Bei den Bauteilen 2, 3 kann es sich beispielsweise um Längsträger eines Aufbau-Rahmens und eines Fahrzeug-Rahmens handeln. Mit den Bauteilen 2, 3 ist jeweils eine Konsole fest verbunden, vorzugsweise verschweißt, die zwei einander gegenüberliegende Bauteilbereiche 20, 30 bilden. Durch jeden Bauteilbereich 20, 30 verläuft eine Bohrung 21, 31, wobei die beiden Bohrungen 21, 31 miteinander fluchten.

Auf die nach oben weisende Seite des oberen Bauteilbereichs 20 ist eine im vorliegenden Ausführungsbeispiel hohlzylindrische metallische Hülse 14 mit einem eine zentrale Durchbrechung aufweisenden Boden 14' aufgesetzt. In der Hülse 14 ist ein elastisch-flexibler Körper 13 angeordnet, wobei die Hülse 14 in dem hier vorliegenden entspannten Zustand des Körpers 13 diesen unter Freilassung eines Luftringspalts 15 umgibt. Der Körper 13 besitzt eine zentrale Durchbrechung 13', die mit den beiden Bohrungen 21, 31 und mit der Durchbrechung im Boden 14' fluchtet.

Durch die Durchbrechung 13' im Körper 13, die Durchbrechung im Boden 14' und die beiden Bohrungen 21, 31 verläuft ein Befestigungselement, hier in Form einer Schraube 10. Die Schraube 10 besitzt oben einen Kopf 10', der unter Zwischenlage einer Unterlegscheibe 12 an der nach oben weisenden Stirnseite des elastisch-flexiblen Körpers 13 anliegt. Das untere Ende der Schraube 10 ragt durch die Bohrung 31 im unteren Bauteilbereich 30 nach unten vor; an dieser Stelle ist unter Zwischenlage einer weiteren Unterlegscheibe 12' eine Mutter 11 auf das Gewinde der Schraube 10 aufgeschraubt und auf dieser gegen Losdrehen gesichert. Der Körper 13 ist also in seiner Position eingeschlossen; bei Bedarf kann der Körper 13 durch entsprechendes Anziehen von Schraube 10 und Mutter 11 auch vorgespannt werden.

Sofern keine äußeren Belastungen auftreten, liegen die beiden Bauteile 2, 3 aneinander an und werden in dieser Lage durch das Verbindungselement 1 gehalten. Selbstverständlich kann je nach Größe der Bauteile 2, 3 das Verbindungselement 1 in mehrfacher Ausführung angebracht sein.

Sobald zwischen den beiden Bauteilen 2, 3 in Richtung der Schraube 10 weisende Zugkräfte auftreten, die die beiden Bauteile 2, 3 voneinander entfernen, ist ein begrenztes Abheben des Bauteils 2 vom Bauteil 3 möglich. Hierbei wird der elastisch-flexible Körper 13 in seiner Axialrichtung komprimiert, wodurch gleichzeitig eine Expansion in Radialrichtung hervorgerufen wird. Da, wie die Zeichnung zeigt, die Unterlegscheibe 12 an der oberen Stirnseite des Körpers 13 dessen gesamte Stirnfläche überdeckt, kann bei einer axialen Kompression der Körper 13 nur mit einer radialen Expansion reagieren. Die Expansion in Radialrichtung ist so lange möglich, bis der Körper 13 so weit expandiert ist, daß er sich über seine gesamte Höhe gegen den Innenumfang der Hülse 14 anlegt. Hiernach ist eine weitere Kompression des Körpers 13 in seiner Axialrichtung nicht oder kaum noch möglich, so daß dann die Beweglichkeit der Bauteile 2, 3 relativ zueinander begrenzt wird. Der Körper 13 sorgt so für eine günstige progressive Wirkung der Bewegungsbegrenzung und -dämpfung.

Gleichzeitig wird eine gewisse Beweglichkeit in Querrichtung zur Schraube 10 ermöglicht, da, wie im vorliegenden Ausführungsbeispiel gezeigt, die Bohrung 21 als Langloch ausgeführt ist, dessen Längsrichtung in Längsrichtung der Bauteile 2, 3 verläuft. Zusätzlich kann auch die Bohrung 31 als Langloch ausgeführt sein, wobei dann zweckmäßig die Längsrichtung des Langlochs 31 quer zur Längsrichtung des Langlochs 21 gerichtet ist. Auch bei solchen Verschiebungen in Querrichtung zur Schraube 10 wird eine gewisse Beweglichkeit erlaubt, die aber ebenfalls durch den elastisch-flexiblen Körper 13 begrenzt und gedämpft wird.

Die elastischen Eigenschaften des Verbindungselements 1 können durch Wahl der Vorspannung der Schraube 10 variiert werden; je stärker die Schraube 10 durch Verdrehen der Mutter 11 gespannt wird, desto weiter wird der elastisch-flexible Körper 13 schon in Radialrichtung expandiert. Hierdurch wird ein härteres Ansprechen des Verbindungselements bewirkt. Umgekehrt wird bei geringerer Vorspannung des elastisch-flexiblen Körpers 13 ein zunächst weicheres Ansprechen des Verbindungselements 1 erreicht.

Wie die Figur 1 zeigt, ist der elastisch-flexible Körper 13 allseitig von metallischen Teilen umgeben, nämlich an seinem Umfang von der Hülse 14, an seiner unteren Stirnseite von dem Bauteilbereich 20 und an seiner oberen Stirnseite von der Unterlegscheibe 12. Damit ist ein Ausweichen des elastisch-flexiblen Körpers 13 nach außen ausgeschlossen und die elastischen Eigenschaften sind dadurch einerseits kontrolliert vorgebbar und andererseits auf Dauer konstant.

Bei Verwedung einer entsprechend längeren Schraube 10 kann an der Unterseite des zweiten Bauteilbereichs 30 eine zweite Einheit aus Körper 13 und Hülse 14 angeordnet werden. Hierdurch wird eine insgesamt weichere Verbindung mit einem größeren Bewegungsbereich der Bauteile 2, 3 relativ zueinander ermöglicht.

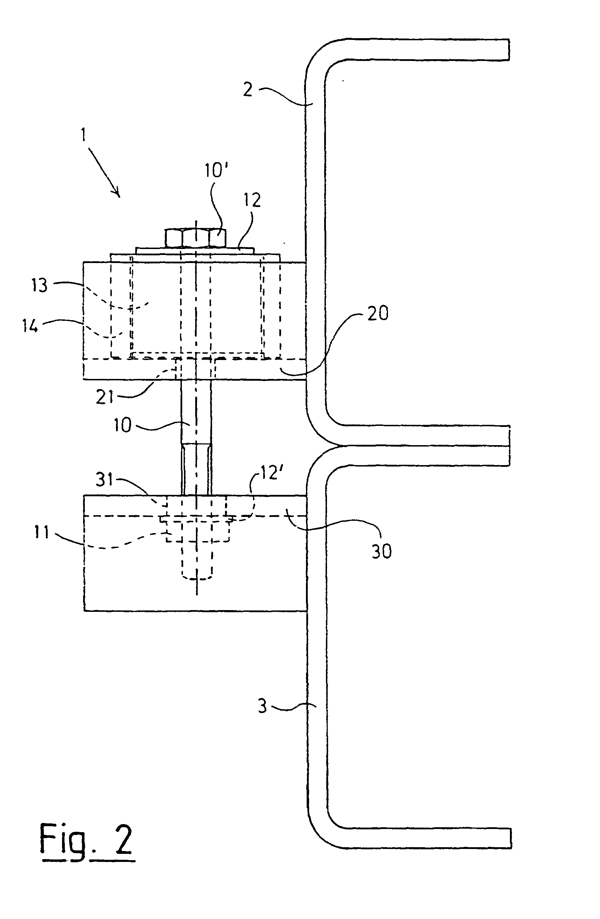

Ein zweites Ausführungsbeispiel des Verbindungselements 1 ist in der Figur 2 dargestellt, nun in einer Seitenansicht. Bei den beiden miteinander verbundenen Bauteilen 2, 3 handelt es sich um im Querschnitt C-förmige Träger, die parallel zueinander und übereinander verlaufen und mit jeweils einem ihrer C-Schenkel aufeinander liegen. Mit jedem Bauteil 2, 3 ist jeweils eine Konsole als Bauteilbereich 20, 30 verbunden, zweckmäßig verschweißt. Auf dem oberen Bauteilbereich 20 ist die Hülse 14 mit dem darin befindlichen elastisch-flexiblen Körper 13 angeordnet, wobei diese Teile durch den Bauteilbereich 20 weitestgehend verdeckt sind. Durch diese Formgebung des Bauteilbereichs 20, die auch in Figur 1 deutlich wird, wird das Verbindungselement 1 gegen äußere mechanische Einwirkungen weitestgehend geschützt.

Durch den Körper 13 verläuft in dessen Axialrichtung die Schraube 10, wobei der Schraubenkopf 10' oben unter Zwischenlage der Unterlegscheibe 12 auf der oberen Stirnseite des Körpers 13 liegt. Der Schaft der Schraube 10 verläuft durch die Bohrung 21 im Bauteilbereich 20 nach unten durch die Bohrung 31 im unteren Bauteilbereich 30 hindurch. Hier wird deutlich, daß die Bohrung 31 als Langloch ausgebildet ist, wobei hier die Langloch-Längsrichtung rechtwinklig zur Langloch-Längsrichtung der Bohrung 21 verläuft, wie auch schon in Figur 1 erläutert. Auf das untere Ende der Schraube 10 ist wieder die Mutter 11 unter Zwischenlage der weiteren Unterlegscheibe 12' aufgeschraubt.

Im Unterschied zu dem Verbindungselement 1 gemäß Figur 1 wird bei dem Verbindungselement 1 gemäß Figur 2 eine besonders lange Schraube 10 verwendet. Hierdurch wird eine noch größere Beweglichkeit des Verbindungselements 1 erreicht, da nicht nur der elastisch-flexible Körper 13 für eine Elastizität der Verbindung sorgt, sondern auch die Schraube 10 an sich aufgrund ihrer Länge eine höhere Flexibilität hat, die der Gesamt-Flexibilität und -Elastizität der Verbindung der beiden Bauteile 2, 3 zugute kommt.

## Patentansprüche

1. Verbindungselement (1) für eine nur in Zugrichtung oder nur in Zug- und Querrichtung elastische Verbindung zweier Bauteile (2, 3) miteinander, insbesondere eines Fahrzeugaufbaus mit einem Fahrgestell, mit zwei einander gegenüberliegenden Bauteilbereichen (20, 30), wobei diese mittels eines Befestigungselements, vorzugsweise eine durch zwei Bohrungen (21, 31) in den Bauteilbereichen (20, 30) verlaufende Schraube (10) mit einer Mutter (11), miteinander verbunden sind, und mit wenigstens einem das Befestigungselement (10) auf einem Teil seiner Länge umgebenden, zwischen einem Kopf (10') des Befestigungselements (10) und dem diesem zugewandten Bauteilbereich (20) angeordneten elastischen Zwischenglied, wobei das elastische Zwischenglied ein aus einem elastisch-flexiblen, inkompressiblen oder gering kompressiblen Material bestehender Körper (13) ist, der in seiner Axialrichtung eingeschlossen oder vorgespannt ist und der an seinem Außenumfang von einer starren Hülse (14) umgeben ist, wobei im montierten Zustand des Verbindungselements (1) durch auftretende Zugkräfte, die die beiden Bauteile (2, 3) voneinander entfernen, der Körper (13) unter Bewegungsdämpfung in seiner Axialrichtung stauchbar und in seiner Radialrichtung nach außen in einem durch den Innendurchmesser der Hülse (14) begrenzten Maß ausdehnbar ist,
**dadurch gekennzeichnet,**
**daß** der Kopf (10') des Befestigungselements (10) oder eine zwischen dem Kopf (10') des Befestigungselements (10) und der diesem zugewandten Stirnseite des Körpers (13) angeordnete Unterlegscheibe (12) ein ein Eintauchen des Kopfes (10') oder der Unterlegscheibe (12) in die Hülse (14) erlaubendes Außenmaß aufweist.

2. Verbindungselement nach Anspruch 1, **dadurch gekennzeichnet, daß** der Kopf (10') oder die Unterlegscheibe (12) einen die gesamte Stirnfläche oder fast die gesamte Stirnfläche des Körpers (13) überdeckenden Außendurchmesser aufweist.

3. Verbindungselement nach Anspruch 1 oder 2, **dadurch gekennzeichnet, daß** der Kopf (10') oder die Unterlegscheibe (12) einen Außendurchmesser aufweist, der um etwa 5 - 10 % kleiner ist als der Innendurchmesser der Hülse (14).

4. Verbindungselement nach einem der vorhergehenden Ansprüche, **dadurch gekennzeichnet, daß** der Körper (13) ein Elastomerkörper ist.

5. Verbindungselement nach einem der Ansprüche 1 bis 4, **dadurch gekennzeichnet, daß** die Hülse (14) in entspanntem Zustand des Körpers (13) dessen Außenumfang unter Freilassung eines Luftringspalts (15) lose umgibt.

6. Verbindungselement nach einem der Ansprüche 1 bis 4, **dadurch gekennzeichnet, daß** der Körper (13) an seinem Außenumfang mit der Hülse (14) verbunden, insbesondere verklebt oder verschweißt oder vergossen, ist.

7. Verbindungselement nach einem der vorhergehenden Ansprüche, **dadurch gekennzeichnet, daß** die Hülse (14) mit einem der beiden Bauteile (2, 3) verbunden oder einstückig ausgeführt ist.

8. Verbindungselement nach einem der vorhergehenden Ansprüche, **dadurch gekennzeichnet, daß** die Hülse (14) becherförmig mit einem mit der übrigen Hülse (14) verbundenen oder einstückigen Boden (14') mit einer Durchbrechung für das Befestigungselement (10) ausgeführt ist.

9. Verbindungselement nach einem der Ansprüche 1 bis 8, **dadurch gekennzeichnet, daß** der Körper (13) einstükkig ausgeführt ist.

10. Verbindungselement nach einem der Ansprüche 1 bis 8, **dadurch gekennzeichnet, daß** der Körper (13) aus mehreren Lagen besteht.

11. Verbindungselement nach Anspruch 10, **dadurch gekennzeichnet, daß** die einzelnen Lagen des Körpers (13) unterschiedliche Elastizitätseigenschaften haben.

12. Verbindungselement nach einem der vorhergehenden Ansprüche, **dadurch gekennzeichnet, daß** zwischen dem dem Körper (13) zugewandten Bauteilbereich (20) und der diesem Bauteilbereich (20) zugewandten Stirnseite des Körpers (13) eine Unterlegscheibe angeordnet ist, deren Außendurchmesser um etwa 5 - 10 % kleiner ist als der Innendurchmesser der Hülse (14).

13. Verbindungselement nach einem der Ansprüche 1 bis 12, **dadurch gekennzeichnet, daß** der Körper (13) außenseitig und die Hülse (14) innenseitig eine untereinander gleiche oder ähnliche, runde oder mehreckige Kontur haben.

14. Verbindungselement nach einem der Ansprüche 1 bis 12, **dadurch gekennzeichnet, daß** der Körper (13) außenseitig und die Hülse (14) innenseitig eine voneinander verschiedene, runde und/oder mehreckige Kontur haben.

15. Verbindungselement nach einem der vorhergehenden Ansprüche, **dadurch gekennzeichnet, daß** der größte Außendurchmesser des Körpers (13) etwa das 1,5- bis 6-fache des Außendurchmessers des durch den Körper (13) verlaufenden Teils des Befestigungselements (10) beträgt.

## Claims

1. Connecting element (1) for an elastic connection between two construction components (2, 3), particularly between the body and the chassis frame of a vehicle, with the elastic connection acting only in the direction of traction or only in the direction of traction and in transverse direction, comprising two construction element sections (20, 30) that are arranged opposite to each other, wherein said sections are connected to each other by means of a mounting element, preferably a bolt (10) extending through two holes (21, 31) in the construction component sections (20, 30) and provided with a nut (11), and comprising at least one elastic intermediate member that encloses the mounting element (10) along a part of its length and is arranged between a head (10') of the mounting element (10) and the construction element section (20) that faces said head (10), wherein the elastic intermediate member is a body (13) that is made of an elastically flexible, incompressible or low-compressible material and is confined or prestressed in its axial direction and is enclosed by a rigid sleeve (14) on its outer perimeter, wherein the body (13) can be compressed in its axial direction under absorption of motion and can be extended outward in its radial direction to a degree that is limited by the inside diameter of the sleeve (14), this being caused by tractive forces occurring when the connecting element (1) is in its mounted state and moving the two construction elements (2, 3) apart from each other,
**characterized in that**
the head (10') of the mounting element (10) or a washer (12) arranged between the head (10') of the mounting element (10) and the front side of the body (13) facing said head (10') comprises an outer dimension that permits the head (10') or the washer (12) to immerse in the sleeve (14).

2. Connecting element according to Claim 1, **characterized in that** the head (10') or the washer (12) comprises an outside diameter covering the entire front side or almost the entire front side of the body (13).

3. Connecting element according to Claim 1 or 2, **characterized in that** the head (10') or the washer (12) comprises an outside diameter that is smaller than the inside diameter of the sleeve (14) by about 5 to 10 percent.

4. Connecting element according to anyone of the preceding claims, **characterized in that** the body (13) is an elastomeric body.

5. Connecting element according to anyone of Claims 1 through 4, **characterized in that** the sleeve (14), with the body (13) being in its unstressed state, encloses the outer perimeter of said body (13) loosely while leaving an annular air gap (15).

6. Connecting element according to anyone of Claims 1 through 4, **characterized in that** the body (13) is, at its outer perimeter, connected, particularly glued or welded or cast, to the sleeve (14).

7. Connecting element according to anyone of the preceding claims, **characterized in that** the sleeve (14) is connected to one of the two construction components (2, 3) or is designed in one piece with one of the two construction components (2, 3).

8. Connecting element according to anyone of the preceding claims, **characterized in that** the sleeve (14) is designed in the form of a cup comprising a bottom that is connected to the remaining sleeve (14) or is made of one piece (14') and comprises a breakthrough for the mounting element (10).

9. Connecting element according to anyone of Claims 1 through 8, **characterized in that** the body (13) is made of one piece.

10. Connecting element according to anyone of Claims 1 through 8, **characterized in that** the body (13) is made of several layers.

11. Connecting element according to Claim 10, **characterized in that** the various layers of the body (13) possess different elastic properties.

12. Connecting element according to anyone of the preceding claims, **characterized in that** a washer is arranged between the construction component section (20) facing the body (12) and the front side of the body (13) facing said construction component section (20), said washer having an outside diameter that is about 5 to 10 percent smaller than the inside diameter of the sleeve (14).

13. Connecting element according to anyone of Claims 1 through 12, **characterized in that** the contour on the outside of the body (13) and the contour on the inside of the sleeve (14) are equal or similar to each other, either round or polygonous.

14. Connecting element according to anyone of Claims 1 through 12, **characterized in that** the contour on the outside of the body (13) and the contour on the inside of the sleeve (14) are unequal to each other, either round and/or polygonous.

15. Connecting element according to anyone of the preceding claims, **characterized in that** the largest outside diameter of the body (13) is greater than the outside diameter of that part of the mounting element (10) that extends through the body (13) by a factor of approximately 1.5 to 6.

## Revendications

1. Élément d'assemblage (1) pour un assemblage entre deux composants de construction (2, 3), en particulier entre une carrosserie de véhicule et un châssis, élastique dans la direction de traction uniquement ou dans la direction de traction et le sens transversal uniquement, avec deux zones (20, 30) opposées des composants de construction, celles-ci étant assemblées entre elles au moyen d'un élément de fixation, de préférence d'une vis (10), avec un écrou (11), passant par deux perçages (21, 31) dans les zones (20, 30) des composants de construction, et avec au moins un élément intermédiaire élastique entourant l'élément de fixation (10) sur une partie de sa longueur et situé entre une tête (10') de l'élément de fixation (10) et la zone (20) du composant de construction tournée vers celle-ci, l'élément intermédiaire élastique étant un corps (13) composé d'un matériau élastique et flexible, incompressible ou faiblement compressible, lequel corps est enfermé ou précontraint dans son sens axial et est entouré d'un manchon rigide (14) sur son pourtour extérieur, le corps (13), à l'état monté de l'élément d'assemblage (1), du fait de l'apparition de forces de traction qui éloignent les deux composants de construction (2, 3) l'un de l'autre, étant compressible dans son sens axial avec amortissement du mouvement et étant extensible dans son sens radial vers l'extérieur dans une mesure limitée par le diamètre intérieur du manchon (14),
**caractérisé en ce que** la tête (10') de l'élément de fixation (10) ou une rondelle (12) située entre la tête (10') de l'élément de fixation (10) et la face frontale du corps (13) tournée vers celle-ci présente une mesure extérieure permettant à la tête (10') ou à la rondelle (12) de s'enfoncer dans le manchon (14).

2. Élément d'assemblage selon la revendication 1, **caractérisé en ce que** la tête (10') ou la rondelle (12) présente un diamètre extérieur recouvrant toute la surface frontale ou presque toute la surface frontale du corps (13).

3. Élément d'assemblage selon la revendication 1 ou 2, **caractérisé en ce que** le tête (10') ou la rondelle (12) présente un diamètre extérieur qui est d'à peu près 5 à 10 % inférieur au diamètre intérieur du manchon (14).

4. Élément d'assemblage selon l'une des revendications précédentes, **caractérisé en ce que** le corps (13) est un corps en élastomère.

5. Élément d'assemblage selon l'une des revendications 1 à 4, **caractérisé en ce que** le manchon (14), à l'état détendu du corps (13), entoure avec jeu le pourtour extérieur de celui-ci en lassant libre une fente d'air annulaire (15).

6. Élément d'assemblage selon l'une des revendications 1 à 4, **caractérisé en ce que** le corps (13), sur son pourtour extérieur, est assemblé, en particulier collé ou soudé ou coulé avec le manchon (14).

7. Élément d'assemblage selon l'une des revendications précédentes, **caractérisé en ce que** le manchon (14) est assemblé ou réalisé d'une seule pièce avec l'un des deux composants de construction (2, 3).

8. Élément d'assemblage selon l'une des revendications précédentes, **caractérisé en ce que** le manchon (14) est réalisé en forme de gobelet avec un fond (14') assemblé ou réalisé d'une seule pièce avec le reste du manchon (14) et comportant une ouverture pour l'élément de fixation (10).

9. Élément d'assemblage selon l'une des revendications 1 à 8, **caractérisé en ce que** le corps (13) est réalisé d'une seule pièce.

10. Élément d'assemblage selon l'une des revendications 1 à 8, **caractérisé en ce que** le corps (13) se compose de plusieurs couches.

11. Élément d'assemblage selon la revendication 10, **caractérisé en ce que** les couches distinctes du corps (13) ont des caractéristiques d'élasticité différentes.

12. Élément d'assemblage selon l'une des revendications précédentes, **caractérisé en ce qu'**est située, entre la zone (20) du composant de construction tournée vers le corps (13) et la face frontale du corps (13) tournée vers cette zone (20) du composant de construction, une rondelle dont le diamètre extérieur est d'à peu près 5 à 10 % inférieur au diamètre intérieur du manchon (14).

13. Élément d'assemblage selon l'une des revendications 1 à 12, **caractérisé en ce que** le corps (13), côté extérieur, et le manchon (14), côté intérieur, ont un contour l'un identique ou similaire à l'autre, rond ou polygonal.

14. Élément d'assemblage selon l'une des revendications 1 à 12, **caractérisé en ce que** le corps (13), côté extérieur, et le manchon (14), côté intérieur, ont un contour l'un différent de l'autre, rond et/ou polygonal.

15. Élément d'assemblage selon l'une des revendications précédentes, **caractérisé en ce que** le plus grand diamètre extérieur de corps (13) est d'à peu près 1,5 à 6 fois le diamètre extérieur de la partie de l'élément de fixation (10) qui passe par le corps (13).
